# EUROPEAN PATENT SPECIFICATION

(11) **EP 3 077 195 B1**
(45) Date of publication and mention of the grant of the patent: **29.08.2018**
(21) Application number: 14868330.3
(22) Date of filing: 08.12.2014
(51) Int. Cl.: B32B 3/12, B32B 5/24, B32B 27/08, B32B 27/18, B32B 27/30

(54) **OPEN AREA CORE WITH CHOPPED FIBER REINFORCED SKIN**
KERN MIT OFFENER REGION MIT SCHNITTFASERVERSTÄRKTER AUSSENHAUT
NOYAU À ZONE OUVERTE AVEC PEAU RENFORCÉE PAR DES FIBRES HACHÉES

(30) Priority: 06.12.2013 US 201361912749 P
(43) Date of publication of application: 12.10.2016
(73) Proprietor: Continental Structural Plastics, Inc., Auburn Hills MI 48326 (US)
(72) Inventor: GUHA, Probir Kumar, Auburn Hills, Michigan 48326 (US); BONTE, Philippe, F-49420 Pouance (FR); BOYER, Dominique, F-49420 Pouance (FR); JOHNSTON, Christopher, Petoskey, Michigan 49770 (US)
(74) Representative: Ellis, Michael James
(86) International application number: PCT/US2014/069122
(87) International publication number: WO 2015/085309

(56) References cited:
- EP-A2- 0 400 599
- WO-A1-00/20186
- WO-A1-2013/103999
- KR-A- 20120 051 312
- US-A- 5 316 604
- US-A- 5 316 604
- US-A1- 2003 197 400
- US-A1- 2013 015 191
- US-A1- 2013 280 469
- US-A1- 2013 280 472

## Description

### RELATED APPLICATIONS

This application claims priority benefit of US Provisional Application Serial Number 61/912,749 filed 6 December 2013.

### FIELD OF THE INVENTION

The present invention in general relates to composites and in particular to a composite sandwich structure with side sheets and an intervening open area core support matrix made of the same composite material as the side sheets.

### BACKGROUND OF THE INVENTION

Weight savings in the automotive, transportation, and logistics based industries has been a major focus in order to make more fuel efficient vehicles both for ground and air transport. In order to achieve these weight savings, light weight composite materials have been introduced to take the place of metal structural and surface body components and panels. Composite materials are materials made from two or more constituent materials with significantly different physical or chemical properties, that when combined, produce a material with characteristics different from the individual components. The individual components remain separate and distinct within the finished structure. A composite material may be preferred for many reasons: common examples include materials which are stronger, lighter, or less expensive when compared to traditional materials. A sandwich-structured composite is a special class of composite material that is fabricated by attaching two thin but stiff skins to a lightweight but thick core. The core material is normally a low strength material, but its higher thickness provides the sandwich composite with high bending stiffness with overall low density.

While sandwich composites provide the aforementioned high bending stiffness with a lower overall density for a lighter weight component, the thermal cycling performance of the sandwich composites is not optimal due to the desperate materials used for the outer skin walls and core and their differing coefficients of thermal expansion which introduces thermal stress. Thus, there exists a need for an improved sandwich composite structure that optimizes thermal cycling performance.

WO 00/20186 A1 describes a moulded automotive structural member made from a heated bottom layer and upper layer having a balanced weave of woven glass and polypropylene bonded to a core layer of honeycomb lattice of polypropylene. US 2013/280469 A1 describes a sandwich type composite. The layers may be fibre-reinforced thermoplastic layers and the core may be a honeycomb layer made of polypropylene. US 5316604 A describes a method of manufacturing composite sandwich panels in a continuous manner. It uses a honeycomb core and opposing facing skins. All three layers may be made of the same material.

### SUMMARY OF THE INVENTION

A process for forming a composite sandwich panel assembly is provided that includes positioning a top sheet and a bottom sheet on opposing sides of an open pore matrix core. The top sheet, bottom sheet, and core are exposed to a heat source with the application of a clamping pressure to the top and the bottom sheet. The heat source is then removed and the clamping pressure maintained for a period of time. The clamping pressure is removed when the top sheet, bottom sheet, and core have cooled and fused together. An assembly formed by such a process is also provided. A phase change material is provided in the core.

### BRIEF DESCRIPTION OF THE DRAWINGS

FIG. 1 is a partial perspective view of a composite sandwich with a portion of the top sheet removed to reveal the honeycomb composite core according to an embodiment of the invention; and
FIG. 2 is a flowchart of a production process for forming the composite sandwich structure according to embodiments of the invention.

### DETAILED DESCRIPTION OF THE INVENTION

The present invention has utility as an improved composite sandwich panel structure with two side sheets that sandwich an intervening open area core support matrix made of the same composite material as the top and bottom sheets to improve thermal cycling performance and reducing stress on the formed part. Embodiments of the inventive sandwich composite structure are formed with thermoplastic polymers including polypropylene, nylons, polycarbonate, polyethylene, acrylonitrile butadiene styrene, polybutylene, polyethylene cross linked, polyvinyl chloride, chlorinated polyvinyl chloride, polyvinylidene fluoride, and block copolymers including any of the aforementioned.

As used herein, the term "same" as applied to a type of polymer is intended to indicate a common monomeric subunit being present as the majority of two polymers. It is appreciated that same polymers in some, but not all instances also have a property within 10 % between one or more of glass transition temperatures, weight average molecular weight (Mw), cross-link density. In still other instances, the components are formed from the same feedstock of thermoplastic.

Embodiments of the inventive sandwich may be reinforced with chopped fibers in both the core and top/bottom sheets. In certain embodiments, the fibers are non-oriented and are random in the polymer. Fibers used to strengthen the formed parts in the composite sandwich include glass, carbon, and other synthetic fibers, as well as natural fibers. Natural fibers illustratively include coconut fibers, bamboo fibers, sugar cane fibers, banana skin fibers, and combinations thereof. The open area core support matrix may be formed in various patterns illustratively including honeycomb, diamonds, squares, triangles, parallelograms, circles, and combinations thereof.

It is to be understood that in instances where a range of values are provided that the range is intended to encompass not only the end point values of the range but also intermediate values of the range as explicitly being included within the range and varying by the last significant figure of the range. By way of example, a recited range of from 1 to 4 is intended to include 1-2, 1-3, 2-4, 3-4, and 1-4.

In certain inventive embodiments, the ratio of cell wall thickness to the maximal linear extent of a cell open area shape are between 0.01-10: 1. A cell wall thickness ranges from 0.1 mm to 100 mm in such inventive embodiments.

The open core area of the sandwich is filled with phase change materials (PCM). Phase change materials are used to manage and regulate the temperature of objects in relation to the object's ambient environment. A PCM has an appreciable latent heat of fusion, and is formulated to have a constant melting temperature (Tm) within the desired operating temperature range of the object to be regulated. Depending upon ambient temperatures and/or temperatures within the object, the PCM absorbs heat from, or releases heat to the object as needed at a substantially constant melting temperature, Tm, to provide the object with improved temperature stability, maintaining it for longer periods of time within its optimal operating temperature range. In general, when PCMs reach the temperature at which they change phase (their melting temperature) they absorb large amounts of heat at an almost constant temperature. The PCM and the inventive structure containing the same thus maintains a narrow temperature range compared to the surrounds while both solid and liquid phases are simultaneously present and the latent heat of fusion is either being absorbed (melting) or released (freezing). The PCM continues to absorb heat without a significant rise in temperature until all the material is transformed to the liquid phase. When the ambient temperature around a liquid material falls, the PCM solidifies, releasing its stored latent heat.

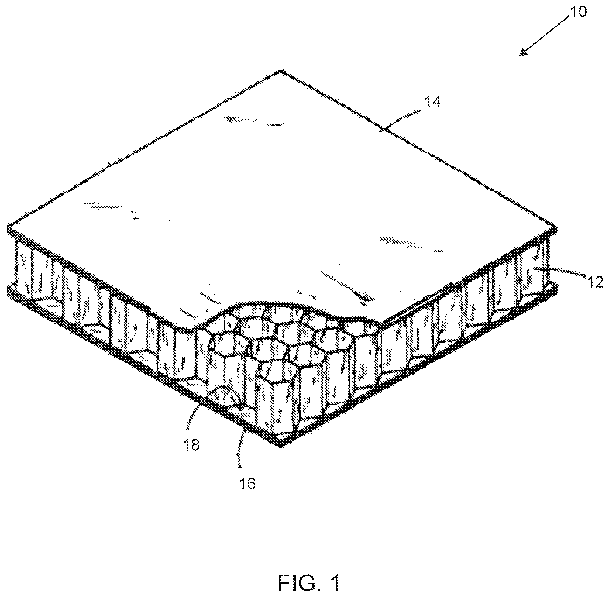

Referring now to the figures, FIG. 1 is a partial perspective view of an embodiment of the inventive composite sandwich 10 with a honeycomb core 12 that is enclosed with a top sheet 14 and a bottom sheet 16. A portion of the top sheet 14 is removed to reveal the honeycomb composite core 12. The top sheet 14 and bottom sheet 16 are formed from the same thermoplastic polymer as the core 12. The thermoplastic polymer may be reinforced with non-oriented fibers including synthetic, glass, carbon, and natural fibers. The use of the same composite materials in both the top 14 and bottom sheets 16 as well as the core 12 ensure a thermal match between the materials when they are joined as a sandwich 10, thereby improving the thermal cycle performance of the sandwich 10. The use of thermoplastic materials allows for the heat fusing of the top 14 and bottom sheets 16 inner surface 18 to the core 12 during the manufacturing of the sandwich 10.

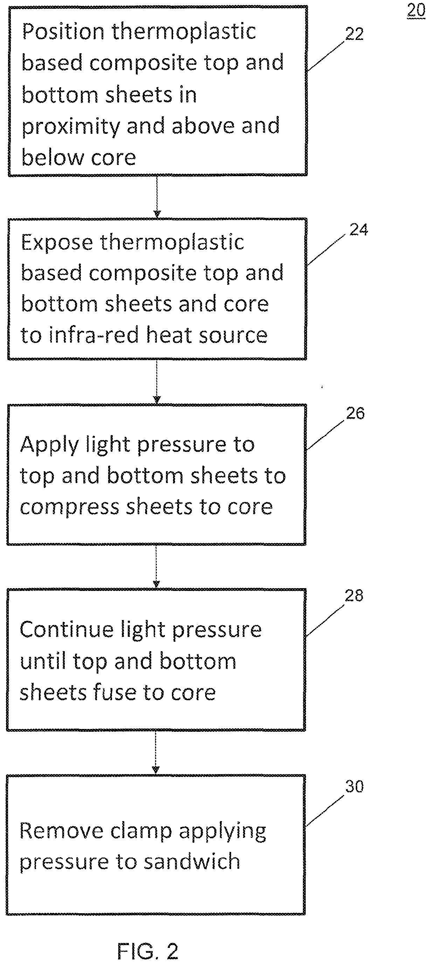

FIG. 2 is a flowchart of a production process 20 for forming the composite sandwich structure according to embodiments of the invention. The process 20 starts by positioning the top and bottom sheets about the core (step 22) and then exposing the arrangement to an infra-red heat source to soften the thermoplastic (step 24). At step 26, a clamping pressure is applied to the still softened thermoplastic so as to compress the sheets to the core and retain contact. At step 28, the clamping pressure is still applied as the thermoplastic parts cool and fuse together. Once the parts have cooled off, and a fused sandwich has formed, the clamp is removed (step 30). It is appreciated that opposing platens are readily used to apply dynamic heat and pressure. The platens are readily heated and cooled as needed to achieve fusion between the sheets and core without causing collapse of open core matrix areas.

It is appreciated that a plasma source can be used to provide not only heat, but free radical bonding sites between a sheet and the open pore matrix core. Such plasma sources are conventional to the field.

The foregoing description is illustrative of particular embodiments of the invention, but is not meant to be a limitation upon the practice thereof. The following claims, including all equivalents thereof, are intended to define the scope of the invention.

## Claims

1. A process for forming a composite sandwich panel assembly (10), said method comprising:
positioning a top sheet (14) and a bottom sheet (16) on opposing sides of an open pore matrix core (12), at least one of said top sheet (14), said bottom sheet (16), and said core (12) comprising fibers;
exposing said top sheet (12), said bottom sheet (14), and said core (12) to a heat source;
applying a clamping pressure to said top (14) and said bottom sheet (16);
removing the heat source and maintaining the clamping pressure; and
removing the clamping pressure when said top sheet (14), said bottom sheet (16), and said core (12) have cooled and fused together, said top sheet (14), said bottom sheet (16), and said core (12) are all made of thermoplastic polymer material
the process **characterized in that** a phase change material is provided in said core (12).

2. The process of claim 1 wherein said top sheet (14), said bottom sheet (16), and said core (12) are all formed of the same thermoplastic polymer material.

3. The process of claim 2 wherein said thermoplastic polymer is at least one of a polypropylene, or a nylon material.

4. The process of claim 1 wherein said fibers are at least one of glass, carbon, or other synthetic fibers.

5. The process of claim 1 wherein said fibers are natural fibers.

6. The process of claim 5 wherein said natural fibers are at least one of coconut fibers, bamboo fibers, sugar cane fibers, or banana skin fibers.

7. The process of any of claims 1 to 6 wherein said fibers are not oriented.

8. The process of any of claims 1 to 6 wherein said core (12) is at least one of a pattern of honeycomb, diamonds, squares, triangles, parallelograms, or circles.

9. A composite sandwich panel assembly (10), said assembly (10) comprising:
a top sheet (14) and a bottom sheet (16) fused to opposing sides of an open pore matrix core (12); and
fibers in at least one of said top sheet (14), said bottom sheet (16), or said core (12);
said top sheet (14), said bottom sheet (16), and said core (12) are all made of the same thermoplastic polymer material
**characterized in that** said assembly (10) further comprises a phase change material within said core (12).

10. The assembly (10) of claim 9 wherein said thermoplastic polymer is at least one of a polypropylene, or a nylon material.

11. The assembly (10) of claim 9 wherein at least one of said top sheet (14), said bottom sheet (16), or said core (12) further comprise fibers.

12. The assembly (10) of claim 9 wherein said fibers and/or their orientation are as further defined in any one of claims 4 to 8.

## Patentansprüche

1. Verfahren zum Bilden eines Sandwich-Plattenaufbaus (10) aus einem Verbundwerkstoff, wobei das Verfahren umfasst:
Positionieren einer oberen Schicht (14) und einer unteren Schicht (16) an entgegengesetzten Seiten eines Matrixkerns (12) mit offenen Poren, wobei zumindest eine/einer der oberen Schicht (14), der unteren Schicht (16) und des Kerns (12) Fasern umfasst;
Aussetzen der oberen Schicht (12), der unteren Schicht (14) und des Kerns (12) an eine Wärmequelle;
Beaufschlagen der oberen Schicht (14) und der unteren Schicht (16) mit einem Klemmdruck;
Entfernen der Wärmequelle und Aufrechterhalten des Klemmdrucks; und
Entfernen des Klemmdrucks, wenn die obere Schicht (14), die untere Schicht (16) und der Kern (12) abgekühlt und miteinander verschmolzen sind, wobei die obere Schicht (14), die untere Schicht (16) und der Kern (12) alle aus einem thermoplastischen Polymermaterial gefertigt sind;
wobei das Verfahren **dadurch gekennzeichnet ist, dass** ein Phasenwechselmaterial im Kern (12) vorgesehen ist.

2. Verfahren nach Anspruch 1, wobei die obere Schicht (14), die untere Schicht (16) und der Kern (12) alle aus dem gleichen thermoplastischen Polymermaterial gebildet sind.

3. Verfahren nach Anspruch 2, wobei das thermoplastische Polymer zumindest eines von einem Polypropylen- oder einem Nylonmaterial ist.

4. Verfahren nach Anspruch 1, wobei die Fasern zumindest eine von Glas-, Kohlenstoff- oder anderen Kunstfasern sind.

5. Verfahren nach Anspruch 1, wobei die Fasern Naturfasern sind.

6. Verfahren nach Anspruch 5, wobei die Naturfasern zumindest eine von Kokosnussfasern, Bambusfasern, Zuckerrohrfasern oder Bananenhautfasern sind.

7. Verfahren nach einem der Ansprüche 1 bis 6, wobei die Fasern nicht orientiert sind.

8. Verfahren nach einem der Ansprüche 1 bis 6, wobei der Kern (12) zumindest eines von einem Muster aus Waben, Rauten, Quadraten, Dreiecken, Parallelogrammen oder Kreisen ist.

9. Sandwich-Plattenaufbau (10) aus einem Verbundwerkstoff, wobei der Aufbau (10) umfasst:
eine obere Schicht (14) und eine untere Schicht (16), die mit entgegengesetzten Seiten eines Matrixkerns (12) mit offenen Poren verschmolzen sind; und
Fasern in zumindest einer/einem der oberen Schicht (14), der unteren Schicht (16) oder des Kerns (12);
wobei die obere Schicht (14), die untere Schicht (16) und der Kern (12) alle aus dem gleichen thermoplastischen Polymermaterial gefertigt sind;
**dadurch gekennzeichnet, dass** der Aufbau (10) ferner ein Phasenwechselmaterial im Kern (12) umfasst.

10. Aufbau (10) nach Anspruch 9, wobei das thermoplastische Polymer zumindest eines von einem Polypropylen- oder einem Nylonmaterial ist.

11. Aufbau (10) nach Anspruch 9, wobei zumindest eine/einer der oberen Schicht (14), der unteren Schicht (16) oder des Kerns (12) ferner Fasern umfasst.

12. Aufbau (10) nach Anspruch 9, wobei die Fasern und/oder deren Orientierung wie weiter in einem der Ansprüche 4 bis 8 definiert sind.

## Revendications

1. Procédé de formation d'un ensemble de panneau-sandwich composite (10), ledit procédé comprenant :
positionner une feuille supérieure (14) et une feuille inférieure (16) sur des côtés opposés d'un coeur de matrice à pores ouverts (12), au moins l'un parmi ladite feuille supérieure (14), ladite feuille inférieure (16) et ledit coeur (12) comprenant des fibres ;
exposer ladite feuille supérieure (12), ladite feuille inférieure (14) et ledit coeur (12) à une source de chaleur ;
appliquer une pression de serrage auxdites feuilles supérieure (14) et inférieure (16) ;
enlever la source de chaleur et maintenir la pression de serrage ; et
enlever la pression de serrage lorsque ladite feuille supérieure (14), ladite feuille inférieure (16) et ledit coeur (12) ont refroidi et fusionné ensemble, ladite feuille supérieure (14), ladite feuille inférieure (16) et ledit coeur (12)) étant tous faits de matériau polymère thermoplastique ;
le procédé étant **caractérisé en ce qu'**un matériau à changement de phase est ménagé dans ledit coeur (12).

2. Procédé selon la revendication 1, dans lequel ladite feuille supérieure (14), ladite feuille inférieure (16) et ledit coeur (12) sont tous formés du même matériau polymère thermoplastique.

3. Procédé selon la revendication 2, dans lequel ledit polymère thermoplastique est au moins l'un parmi un polypropylène ou un matériau nylon.

4. Procédé selon la revendication 1, dans lequel lesdites fibres sont au moins l'une parmi le verre, le carbone ou d'autres fibres synthétiques.

5. Procédé selon la revendication 1, dans lequel lesdites fibres sont des fibres naturelles.

6. Procédé selon la revendication 5, dans lequel lesdites fibres naturelles sont au moins l'une parmi des fibres de noix de coco, des fibres de bambou, des fibres de canne à sucre ou des fibres de peau de banane.

7. Procédé selon l'une quelconque des revendications 1 à 6, dans lequel lesdites fibres ne sont pas orientées.

8. Procédé selon l'une quelconque des revendications 1 à 6, dans lequel ledit coeur (12) est au moins l'un parmi un motif de nid d'abeilles, de losanges, de carrés, de triangles, de parallélogrammes ou de cercles.

9. Ensemble de panneau-sandwich composite (10), ledit ensemble (10) comprenant :
une feuille supérieure (14) et une feuille inférieure (16) fusionnées au niveau de côtés opposés d'un coeur de matrice à pores ouverts (12) ; et
des fibres dans au moins l'un parmi ladite feuille supérieure (14), ladite feuille inférieure (16) ou ledit coeur (12) ;
ladite feuille supérieure (14), ladite feuille inférieure (16) et ledit coeur (12) étant tous constitués du même matériau polymère thermoplastique ;
**caractérisé en ce que** ledit ensemble (10) comprend en outre un matériau à changement de phase à l'intérieur dudit coeur (12).

10. Ensemble (10) selon la revendication 9, dans lequel ledit polymère thermoplastique est au moins l'un parmi un polypropylène ou un matériau nylon.

11. Ensemble (10) selon la revendication 9, dans lequel au moins l'un parmi ladite feuille supérieure (14), ladite feuille inférieure (16) ou ledit coeur (12) comprend en outre des fibres.

12. Ensemble (10) selon la revendication 9, dans lequel lesdites fibres et/ou leur orientation sont telles que définies en outre dans l'une quelconque des revendications 4 à 8.
